# EUROPÄISCHE PATENTSCHRIFT

(11) **EP 1 052 121 B1**
(45) Veröffentlichungstag und Bekanntmachung des Hinweises auf die Patenterteilung: **27.07.2005**
(21) Anmeldenummer: 99109126.5
(22) Anmeldetag: 08.05.1999
(51) Int. Cl.: B60D 1/06, B60D 1/28

(54) **Anhänger-Kugelkupplung**
Trailer ball hitch
Attelage de remorque à rotule

(43) Veröffentlichungstag der Anmeldung: 15.11.2000
(73) Patentinhaber: BPW Bergische Achsen Kommanditgesellschaft, 51674 Wiehl (DE)
(72) Erfinder: Dowe, Günter, Ing. grad., 51588 Nümbrecht (DE)
(74) Vertreter: Christophersen, Ruth

(56) Entgegenhaltungen:
- EP-A- 0 483 926
- DE-C- 944 166
- FR-A- 1 548 623
- FR-A- 2 378 644
- US-A- 2 130 100
- US-A- 2 459 448
- US-A- 2 823 931
- US-A- 3 730 559

## Beschreibung

Die Erfindung betrifft eine Anhänger-Kugelkupplung, bestehend aus einem Gehäuse, an dessen vorderem Ende eine Kugelaufnahme angeordnet ist, sowie mit einem verriegelbaren Schließmechanismus zum Schließen der Kugelkupplung um die Kugel des Zugfahrzeuges, wobei der Schließmechanismus zu seiner Betätigung einen gegenüber dem Gehäuse auf einer Drehachse gelagerten und mit einem Handgriff versehenen Schließhebel aufweist, wobei der Handgriff in Bezug auf den Schließhebel in mindestens zwei unterschiedlichen Stellungen an dem Schließhebel einstellbar ist.

Eine solche Anhänger-Kugelkupplung ist aus der EP 0 483 926 A 1 bekannt. Der Schließmechanismus weist einen Schließhebel auf, an dessen rückwärtigem Ende ein langer Handgriff vorgesehen ist, um auf diese Weise einen großen und damit kräftesparenden Hebelarm zur Betätigung des Schließmechanismus zu erzielen. In Bezug auf den Schließhebel ist der Handgriff in zwei unterschiedlichen Stellungen an dem Schließhebel einstellbar. Infolge des sich in Betätigungsrichtung gegenüber dem Schließhebel drehenden und weit nach hinten reichenden Handgriffes weist der Betätigungsmechanismus eine insgesamt große Baulänge auf, so daß, je nach konstruktiver Gestaltung der übrigen Elemente im Bereich der Anhänger-Deichsel, der verbleibende Freiraum sehr eng ist und es im Bereich des Handgriffes leicht zu verletzungsträchtigen Kollisionen kommen kann, insbesondere mit dem dort bei vielen Anhängermodellen angeordneten Stützrad oder dem Handbremshebel.

Angesichts dieser Nachteile beim Stand der Technik liegt der Erfindung die **Aufgabe** zugrunde, eine Anhänger-Kugelkupplung zu schaffen, die sich durch eine kompakte Bauweise der zur Betätigung des Schließmechanismus erforderlichen Bauteile auszeichnet.

Zur **Lösung** wird bei einer Anhänger-Kugelkupplung der eingangs genannten Art vorgeschlagen, daß in zumindest einer dieser Stellungen Handgriff und Schließhebel einen um die Drehachse drehbaren, gemeinsamen und in Betätigungsrichtung starren Hebelarm bilden.

Erfindungsgemäß kann der Handgriff von einer ersten Stellung (Ruhestellung) in mindestens eine weitere Stellung (Betätigungsstellung) überführt werden. In der Betätigungsstellung ist der Handgriff besonders gut und, da er mit dem Schließhebel einen gemeinsamen, sich in Betätigungsrichtung starr verhaltenden Hebelarm bildet, mit günstigem, d.h. langem, Hebelarm greifbar, so daß sich der Schließmechanismus der Kugelkupplung ohne großen Kraftaufwand betätigen läßt. In der Ruhestellung hingegen nimmt der Handgriff eine Position ein, die zu einer relativ kompakten Bauform mit entsprechend großen Freiräumen zu den übrigen Elementen eines Anhängers führt, etwa dem nahe der Anhänger-Kugelkupplung angeordneten Stützrad des Anhängers oder dessen Handbremse.

Vorzugsweise ist der Handgriff um eine den Handgriff mit dem Schließhebel verbindende Achse zwischen den beiden Stellungen verschwenkbar. Gemäß einer ersten Variante wird die Verschwenkbarkeit dadurch erzielt, daß sich der Handgriff in der ersten Stellung (Ruhestellung) seitlich des Schließhebels, und in der zweiten Stellung (Betätigungsstellung) oberhalb des Schließhebels befindet. Gemäß einer zweiten Variante befindet sich der Handgriff in der ersten Stellung (Ruhestellung) oberhalb des Schließhebels und in der zweiten Stellung (Betätigungsstellung) in Verlängerung zu dem rückwärtigen Ende des Schließhebels. In beiden Fällen wird in der Ruhestellung des Hebels eine besonders kompakte Bauform erzielt.

Gemäß einer vorteilhaften Ausgestaltung wird vorgeschlagen, daß die den Handgriff mit dem Schließhebel verbindende Achse am rückwärtigen Ende des Schließhebels angeordnet ist. Die Achse erstreckt sich vorzugsweise horizontal und quer zur Anhänger-Zugrichtung, wobei der Handgriff in seiner Betätigungsstellung verriegelbar ist.

Mit der Erfindung wird ferner vorgeschlagen, daß der Handgriff durch Federkraft selbsttätig in seiner Ruhestellung gehalten ist. Auf diese Weise wird vermieden, daß sich der Handgriff versehentlich nach Betätigung des Schließmechanismus noch in seiner raumgreifenden Betätigungsstellung befindet und es beim Auflaufen des Anhängers während des Bremsvorgangs oder bei Rückwärtsfahrt zu Kollisionen mit anderen Elementen des Anhängers kommen kann.

Gemäß einer weiteren Ausgestaltung der Erfindung ist der Handgriff beweglich mit einer starren Grundplatte verbunden, die lösbar auf dem Schließhebel befestigt ist. Auf diese Weise wird eine einfache, aber wirkungsvolle Diebstahlsicherung geschaffen, indem der Handgriff samt der Grundplatte nach dem Abstellen des Anhängers von dem Schließhebel abgenommen und vom Fahrzeuginhaber mitgenommen wird. Die abnehmbare starre Grundplatte eröffnet ferner die Möglichkeit, baugleiche und damit universell einsetzbare Schließhebel mit individuell auf den jeweiligen Anhänger zugeschnittenen Handgriffen zu versehen.

Weitere Einzelheiten und Vorteile des Gegenstandes der Erfindung werden nachfolgend anhand mehrerer auf der Zeichnung dargestellter Ausführungsbeispiele beschrieben. Auf der Zeichnung zeigen:
- Fig. 1: eine Kugelkupplung für einen Fahrzeuganhänger in Seitenansicht;
- Fig. 2: in einer Seitenansicht einen schwenkbaren Handgriff mit Grundplatte zur lösbaren Montage auf der Kugelkupplung nach Fig. 1;
- Fig. 3: die Gegenstände nach Fig. 2 in einer Draufsicht;
- Fig. 4: eine Kugelkupplung für einen Fahrzeuganhänger in einer zweiten Ausführungsform;
- Fig. 5: einen Schnitt durch die Kugelkupplung nach Fig. 4 entlang der Schnittebene V-V;
- Fig. 6: eine Kugelkupplung für einen Fahrzeuganhänger gemäß einer dritten Ausführungsform und
- Fig. 7: einen Schnitt durch die Kugelkupplung nach Fig. 6 entlang der Schnittebene VII-VII.

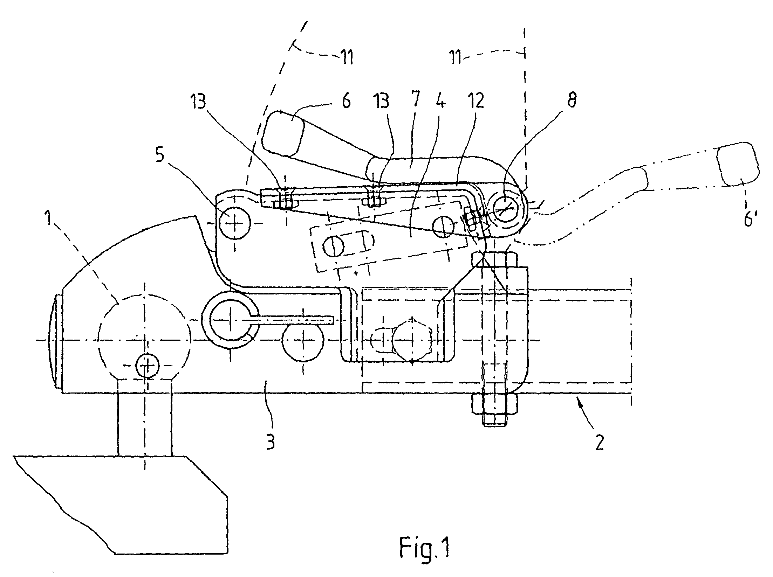

Die Fig. 1 zeigt eine Kugelkupplung in Betriebsstellung, d. h. auf der Kugel 1 des Zugfahrzeuges aufsitzend. Derartige Kugelkupplungen finden vorwiegend für Wohnanhänger und leichtere Nutzfahrzeuganhänger Verwendung. Die in horizontaler Verlängerung der Kugel 1 angeordnete Deichsel 2 ist an ihrem vorderen Ende mit einem Gehäuse 3 versehen, in dem sich alle erforderlichen Kupplungselemente zur Verbindung mit der Kugel 1 des Zugfahrzeuges befinden. U.a. befinden sich in dem Gehäuse 3 Reibbacken der Kugelkupplung, welche die Kugel 1 des Zugfahrzeuges umschließen und auf diese Weise eine spiellose Verbindung zwischen dem Zugfahrzeug und dem gezogenen Fahrzeug, d. h. dem Anhänger, herstellen. Die auf der Zeichnung nicht dargestellten Reibbacken, deren Kontur der genormten Kugel 1 angepaßt ist, sind teilweise in dem Gehäuse 1 feststehend und teilweise gegen die Mantelfläche der Kugel 1 spannbar. Die Betätigung der mindestens einen spannbaren Reibbacke erfolgt mittels eines auf dem Gehäuse 3 gelagerten Schließhebels 4. Bei den hier gezeigten Ausführungsbeispielen handelt es sich bei dem Schließhebel 4 um einen einfachen Gelenkhebel, der um eine gehäusefeste Drehachse 5 am vorderen Ende des Schließhebels 4 schwenkbar ist. Jedoch sind für den Schließhebel auch zweigelenkige Hebel bekannt, z. B. aus der EP 0 483 926 A1. Mittels eines zweigelenkigen Schließhebels läßt sich auf die bewegliche Reibbacke ein höherer Druck aufbringen, so daß nicht nur die erforderliche formschlüssige Verbindung zwischen Kugel und Kugelkupplung hergestellt wird, sondern zusätzlich eine "Schlingerstop"-Funktion erreicht wird.

Die Betätigung des an seinem vorderen Ende über die Drehachse 5 gelagerten Schließhebels 4 zum Zwecke des Ankuppelns oder Entkuppelns des Anhängers vom Zugfahrzeug erfolgt von Hand unter Zuhilfenahme eines Handgriffs 6. Erfindungsgemäß ist dieser Handgriff 6 nicht starr an dem Schließhebel 4 angeordnet, sondern er läßt sich in zwei unterschiedlichen Stellungen relativ zu dem Schließhebel 4 einstellen.

Bei dem Ausführungsbeispiel gemäß den Figuren 1 bis 3 ist der Handgriff 6 mit einer Verlängerung 7 versehen, deren in Ruhestellung hinteres Ende über eine Achse 8 mit dem hinteren Ende des Schließhebels 4 gelenkig verbunden ist. Die Achse 8 mit horizontaler Ausrichtung erstreckt sich hierbei quer zur Fahrtrichtung. Demzufolge lassen sich Handgriff 6 und Verlängerung 7 aus der in Fig. 1 dargestellten Ruhestellung, bei der sich der Handgriff 6 oberhalb des Schließhebels 4 befindet, um ca. 180° bis in die in Fig. 1 gestrichelt dargestellte Betätigungsstellung verschwenken. Der Handgriff 6' in Betätigungsstellung befindet sich auf diese Weise relativ weit entfernt von der Drehachse 5 des Schließhebels 4, so daß ein langer und damit günstiger Hebelarm zur Betätigung des Schließhebels 4 erzielt wird. Dieser Hebelarm setzt sich aus der Länge des Schließhebels 4 selbst und der zusätzlichen Länge der Verlängerung 7 des Handgriffs 6' zusammen.

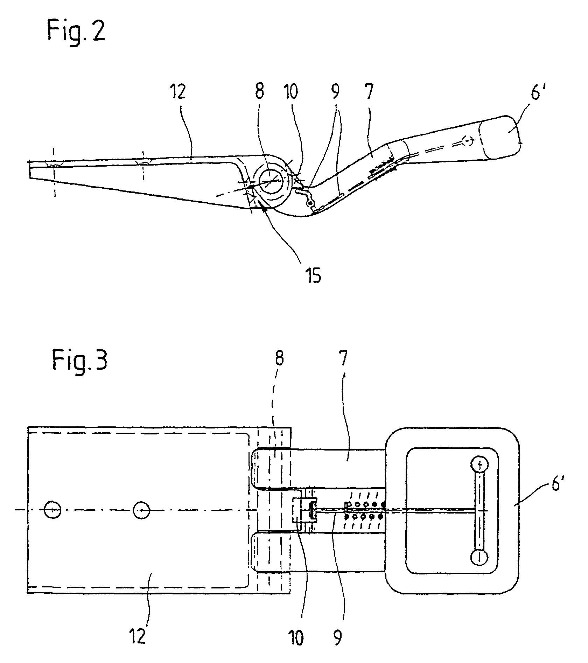

In seiner Betätigungsstellung ist der Handgriff verriegelbar. Die Figuren 2 und 3 lassen hierzu erkennen, daß der Handgriff 6' mit einer Sperre versehen ist, die sich über ein Betätigungsgestänge 9 hinter einem starr mit dem Schließhebel 4 verbundenen Nocken 10 verriegeln läßt, um die Kugelkupplung zu lösen. Zum Schließen wird der Handgriff 6' nach unten gedrückt und nimmt über den Anschlag 15 der Grundplatte 12 den Schließhebel 4 mit. Die Betätigung der Sperre kann zugleich mit dem Erfassen des Handgriffs 6 erfolgen, wie Fig. 2 erkennen läßt. Wird die Sperre nicht betätigt, gelangt der Handgriff 6' von selbst wieder von seiner Betätigungsstellung in seine Ruhestellung, wozu im Bereich der Achse 8 ein geeignetes Federelement angeordnet ist. Unbetätigt nimmt der Handgriff 6 daher stets die in Fig. 1 in durchgezogenen Linien dargestellte Ruhestellung ein, in der sich der Handgriff 6 einschließlich seiner Verlängerung 7 oberhalb des Schließhebels 4 befindet. Hierdurch ergibt sich eine besonders kompakte Anordnung mit einem großen, in Fig. 1 gestrichelt dargestellten Freiraum 11 zu dem Zugfahrzeug sowie zu nahegelegenen Bauteilen im Bereich der Anhängerdeichsel 2, etwa einem dort angeordneten Stützrad des Anhängers oder dessen Handbremse.

Gemäß den Figuren 1 bis 3 befindet sich die Achse 8, welche den Schließhebel 4 mit dem Handgriff 6 bzw. dessen Verlängerung 7 verbindet, nicht unmittelbar an oder auf dem Schließhebel 4, sondern an einer Grundplatte 12, die auf den Schließhebel 4 aufgesetzt ist. Fig. 1 läßt erkennen, daß diese Grundplatte 12 mittels Schrauben mit der Oberseite und der Rückseite des Schließhebels 4 verschraubt ist. Handgriff 6 und Schließplatte 12 lassen sich daher bei Bedarf von dem Schließhebel 4 abnehmen, beispielsweise als zusätzliche Diebstahlsicherung. Ein weiterer Vorteil der Lösbarkeit des Handgriffs ist darin zu sehen, daß herstellerseitig für eine große Modellpalette identische Schließhebel 4 verwendet werden können, die dann je nach den räumlichen Gegebenheiten im Bereich der Deichsel 2 des jeweils bestückten Anhängers mit unterschiedlichen Handgriffen versehen werden können.

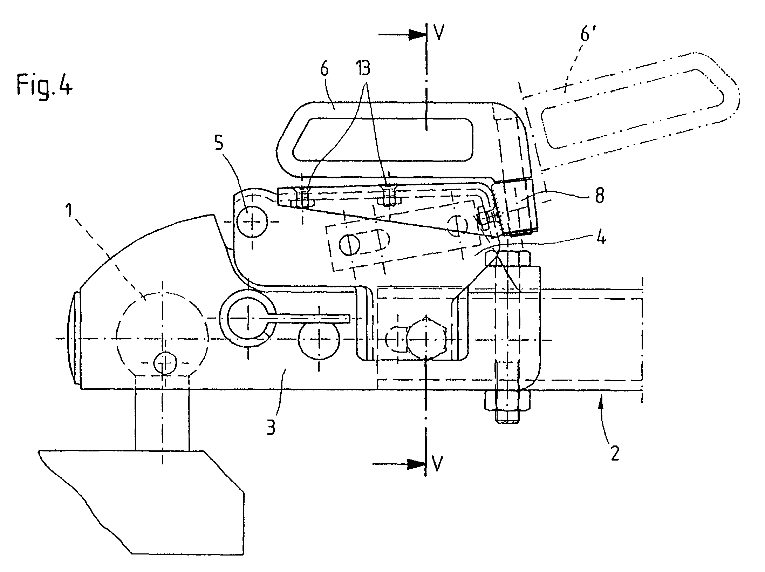

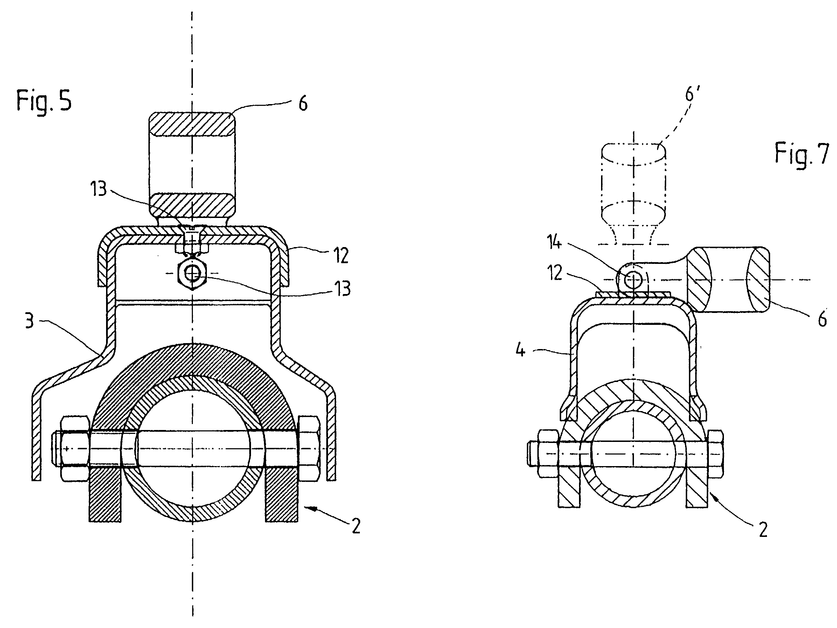

Einer dieser Handgriffe ist in den Figuren 1 bis 3 dargestellt. Eine weitere Ausführungsform eines Handgriffs wird nachfolgend anhand der Figuren 4 und 5 erläutert. Auch bei der Ausführungsform nach den Figuren 4 und 5 ist mittels der Schrauben 13 eine Grundplatte 12 auf den Schließhebel 4 aufsetzbar. Die Achse 8, welche den Handgriff 6 mit dem Schließhebel 4 verbindet, liegt bei der Ausführungsform nach den Figuren 4 und 5 jedoch nicht horizontal, sondern in etwa vertikal. Infolge dieser Anordnung der Achse 8 läßt sich der in Ruhestellung oberhalb des Schließhebels 4 angeordnete Handgriff 6 um 180° nach hinten verschwenken, wo er die in Fig. 4 strichpunktiert eingezeichnete Stellung als Handgriff 6' einnimmt. Auch hier erfolgt das Verschwenken von der Ruhestellung in die Betätigungsstellung entgegen der Kraft einer in der Achse 8 integrierten Rückstellfeder, so daß der Handgriff bei Nichtbetätigung stets seine Ruhestellung einnimmt. Die Achse 8 zwischen Schließhebel 4 und Handgriff 6 befindet sich auch bei dieser Ausführungsform am hinteren Ende des Schließhebels 4.

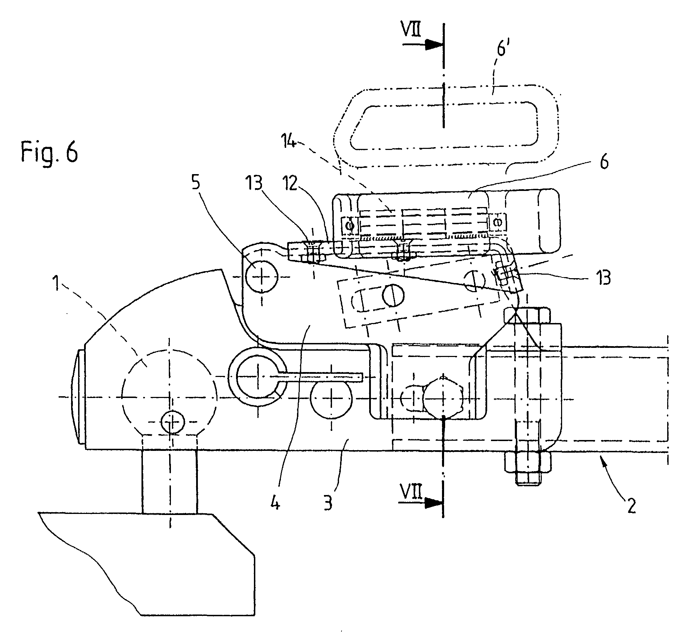

Eine weitere Ausführungsform ist in den Figuren 6 und 7 dargestellt. Abweichend von den voranstehend beschriebenen Ausführungsformen befindet sich hierbei der Handgriff 6 in seiner Ruhestellung seitlich des Schließhebels 4, wohingegen der Handgriff 6' in seiner Betätigungsstellung eine Position oberhalb des Schließhebels 4 einnimmt. Der Handgriff 6 ist hierzu um eine Achse 14 gegenüber dem Schließhebel 4 schwenkbar, die sich in Längsrichtung des Schließhebels 4 bzw. in Fahrtrichtung erstreckt und auf der Oberseite der Grundplatte 12 befestigt ist. Auch bei dieser Ausführungsform ist im Bereich der Achse 14 ein Federelement integriert, welches den Handgriff 6 in seine seitlich abgeklappte Ruhestellung überführt, wenn dieser nicht ergriffen wird.

### Bezugszeichenliste

- 1: Kugel
- 2: Deichsel
- 3: Gehäuse
- 4: Schließhebel
- 5: Drehachse
- 6: Handgriff in Ruhestellung
- 6': Handgriff in Betätigungsstellung
- 7: Verlängerung
- 8: Achse
- 9: Gestänge
- 10: Nocken
- 11: Freiraum
- 12: Grundplatte
- 13: Schraube
- 14: Achse
- 15: Anschlag

## Patentansprüche

1. Anhänger-Kugelkupplung, bestehend aus einem Gehäuse (3), an dessen vorderem Ende eine Kugelaufnahme angeordnet ist, sowie mit einem verriegelbaren Schließmechanismus zum Schließen der Kugelkupplung um die Kugel (1) des Zugfahrzeuges, wobei der Schließmechanismus zu seiner Betätigung einen gegenüber dem Gehäuse (3) auf einer Drehachse (5) gelagerten und mit einem Handgriff (6) versehenen Schließhebel (4) aufweist, wobei der Handgriff (6) in Bezug auf den Schließhebel (4) in mindestens zwei unterschiedlichen Stellungen an dem Schließhebel (4) einstellbar ist,
**dadurch gekennzeichnet,**
**daß** in zumindest einer dieser Stellungen Handgriff (6) und Schließhebel (4) einen um die Drehachse (5) drehbaren, gemeinsamen und in Betätigungsrichtung starren Hebelarm bilden.

2. Anhänger-Kugelkupplung nach Anspruch 1, **dadurch gekennzeichnet, daß** der Handgriff (6) um eine den Handgriff (6) mit dem Schließhebel (4) verbindende Achse (8, 14) zwischen den beiden Stellungen verschwenkbar ist.

3. Anhänger-Kugelkupplung nach Anspruch 1 oder Anspruch 2, **dadurch gekennzeichnet, daß** sich der Handgriff (6) in der ersten Stellung (Ruhestellung) seitlich des Schließhebels (4), und in der zweiten Stellung (Betätigungsstellung) oberhalb des Schließhebels (4) befindet.

4. Anhänger-Kugelkupplung nach Anspruch 1 oder Anspruch 2, **dadurch gekennzeichnet, daß** sich der Handgriff (6) in der ersten Stellung (Ruhestellung) oberhalb des Schließhebels (4), und in der zweiten Stellung (Betätigungsstellung) in Verlängerung zu dem rückwärtigen Ende des Schließhebels (4) befindet.

5. Anhänger-Kugelkupplung nach Anspruch 4, **dadurch gekennzeichnet, daß** die den Handgriff (6) mit dem Schließhebel (4) verbindende Achse (8) am rückwärtigen Ende des Schließhebels (4) angeordnet ist.

6. Anhänger-Kugelkupplung nach Anspruch 5, **dadurch gekennzeichnet, daß** sich die Achse (8) horizontal und quer zur Anhänger-Zugrichtung erstreckt, und daß der Handgriff (6) in seiner Betätigungsstellung verriegelbar ist.

7. Anhänger-Kugelkupplung nach einem der Ansprüche 3 bis 6, **dadurch gekennzeichnet, daß** der Handgriff (6) durch Federkraft selbsttätig in seiner Ruhestellung gehalten ist.

8. Anhänger-Kugelkupplung nach einem der vorangehenden Ansprüche, **dadurch gekennzeichnet, daß** der Handgriff (6) lösbar an dem Schließhebel (4) befestigt ist.

9. Anhänger-Kugelkupplung nach Anspruch 8, **dadurch gekennzeichnet, daß** der Handgriff (6) beweglich mit einer starren Grundplatte (12) verbunden ist, die lösbar auf dem Schließhebel (4) befestigt ist.

10. Anhänger-Kugelkupplung nach Anspruch 9, **dadurch gekennzeichnet, daß** die Grundplatte (12) mit dem Schließhebel (4) verschraubt ist.

## Claims

1. Trailer ball hitch, comprising a housing (3), at the front end of which a ball socket is arranged, and having a lockable locking mechanism for locking the ball hitch around the ball (1) of the towing vehicle, the locking mechanism having, for its actuation, a locking lever (4), which is mounted with respect to the housing (3) on an axis of rotation (5) and is provided with a handle (6), it being possible for the handle (6) to be set, with regard to the locking lever (4), in at least two different positions on the locking lever (4), **characterized in that** in at least one of these positions the handle (6) and locking lever (4) form a joint lever arm which can be rotated about the axis of rotation (5) and is rigid in the actuating direction.

2. Trailer ball hitch according to Claim 1, **characterized in that** the handle (6) can be pivoted between the two positions about a spindle (8, 14) connecting the handle (6) to the locking lever (4).

3. Trailer ball hitch according to Claim 1 or Claim 2, **characterized in that** the handle (6), in the first position (rest position), is situated to the side of the locking lever (4), and, in the second position (actuating position), is situated above the locking lever (4).

4. Trailer ball hitch according to Claim 1 or Claim 2, **characterized in that** the handle (6), in the first position (rest position), is situated above the locking lever (4), and, in the second position (actuating position), is situated as an extension of the rear end of the locking lever (4).

5. Trailer ball hitch according to Claim 4, **characterized in that** the spindle (8) connecting the handle (6) to the locking lever (4) is arranged at the rear end of the locking lever (4).

6. Trailer ball hitch according to Claim 5, **characterized in that** the spindle (8) extends horizontally and transversely with respect to the trailer-towing direction, and **in that** the handle (6) can be locked in its actuating position.

7. Trailer ball hitch according to one of Claims 3 to 6, **characterized in that** the handle (6) is automatically retained in its rest position by means of spring force.

8. Trailer ball hitch according to one of the preceding claims, **characterized in that** the handle (6) is fastened releasably to the locking lever (4).

9. Trailer ball hitch according to Claim 8, **characterized in that** the handle (6) is connected moveably to a rigid base plate (12) which is fastened releasably on the locking lever (4).

10. Trailer ball hitch according to Claim 9, **characterized in that** the base plate (12) is screwed to the locking lever (4).

## Revendications

1. Attelage de remorque à rotule constitué d'un boîtier (3) à l'extrémité avant duquel est prévu un logement pour rotule, ainsi que d'un mécanisme de fermeture verrouillable pour fermer l'attelage à rotule autour de la rotule (1) du véhicule tracteur, le mécanisme de fermeture comportant pour son actionnement un levier de fermeture (4) monté, par rapport au boîtier (3), sur un axe de rotation (5) et pourvu d'une poignée (6), la poignée (6) étant réglable par rapport au levier de fermeture (4) dans au moins deux positions différentes sur le levier de fermeture (4),
**caractérisé**
**en ce que** dans au moins l'une de ces positions la poignée (6) et le levier de fermeture (4) forment un bras de levier commun et rigide dans la direction d'actionnement, pouvant tourner autour de l'axe de rotation (5).

2. Attelage de remorque à rotule selon la revendication 1, **caractérisé en ce que** la poignée (6) peut pivoter autour d'un axe (8, 14), reliant la poignée (6) au levier de fermeture (4), entre les deux positions.

3. Attelage de remorque à rotule selon la revendication 1 ou la revendication 2, **caractérisé en ce que** la poignée (6) se trouve sur le côté du levier de fermeture (4) dans la première position (position de repos), et au-dessus du levier de fermeture (4) dans la deuxième position (position d'actionnement).

4. Attelage de remorque à rotule selon la revendication 1 ou la revendication 2, **caractérisé en ce que**, dans la première position (position de repos), la poignée (6) se trouve au-dessus du levier de fermeture (4) et, dans la deuxième position (position d'actionnement), elle se trouve dans le prolongement de l'extrémité arrière du levier de fermeture (4).

5. Attelage de remorque à rotule selon la revendication 4, **caractérisé en ce que** l'axe (8), reliant la poignée (6) au levier de fermeture (4), est disposé à l'extrémité arrière du levier de fermeture (4).

6. Attelage de remorque à rotule selon la revendication 5, **caractérisé en ce que** l'axe (8) s'étend horizontalement et transversalement à la direction de traction de la remorque, et **en ce que** la poignée (6) est verrouillable dans sa position d'actionnement.

7. Attelage de remorque à rotule selon l'une des revendications 3 à 6, **caractérisé en ce que** la poignée (6) est maintenue automatiquement dans sa position de repos par la force d'un ressort.

8. Attelage de remorque à rotule selon l'une des revendications précédentes, **caractérisé en ce que** la poignée (6) est fixée de manière séparable au levier de fermeture (4).

9. Attelage de remorque à rotule selon la revendication 8, **caractérisé en ce que** la poignée (6) est reliée déplaçable à une plaque de base (12) rigide qui est fixée de manière séparable au levier de fermeture (4).

10. Attelage de remorque à rotule selon la revendication 9, **caractérisé en ce que** la plaque de base (12) est vissée avec le levier de fermeture (4).
